# EUROPEAN PATENT SPECIFICATION

(11) **EP 2 782 192 B1**
(45) Date of publication and mention of the grant of the patent: **08.11.2017**
(21) Application number: 13305339.7
(22) Date of filing: 20.03.2013
(51) Int. Cl.: H01R 13/52, B60L 11/18, B60L 3/00

(54) **Electrical connection system**
Elektrisches Verbindungssystem
Système de connexion électrique

(43) Date of publication of application: 24.09.2014
(73) Proprietor: Delphi International Operations Luxembourg S.à r.l., 4940 Bascharage (LU)
(72) Inventor: Malandain, Olivier, 45140 Ormes (FR); Charvet, Sébastien, 78990 Elancourt (FR)
(74) Representative: Delphi France SAS

(56) References cited:
- WO-A1-2011/104609
- US-B1- 8 123 535

## Description

### FIELD OF THE INVENTION

The instant invention relates to electrical connection systems.

### BACKGROUND OF THE INVENTION

In particular, the instant invention is related to an electrical connection system between an electrical appliance and an electrical charger.

Nowadays, with the recent trend for electrical cars, it is also provided electrical chargers in public areas, notably public parking lots. These electrical chargers might be submitted to adverse weather conditions and, in all cases, safety of the users ought to be ensured. Although prior art solutions have proven satisfactory, it is still required to lower the intensity of leakage current which may be encountered by a user holding the charging end when charging in wet conditions.

Yet, providing an interfacial joint between the charger and the electrical car has proven difficult: The charger must stand thousands of connection cycles with different vehicles, the same is true for the vehicle with one or various chargers, and the interfacial seal must not be accessible to any one, in order to prevent any vandalism. So, practically speaking, providing an interfacial seal there currently is not achievable.

Document WO 2011/104609 A1 discloses a drainage inducing member that promotes drainage arranged on an edge portion 011 the back side of a drain hole provided in an inlet base of an inlet assembly, in order to better promote the drainage of water that has reached the drain hole to the outside.

### SUMMARY OF THE INVENTION

It is provided an electrical connection system.

The electrical connection system comprises an electrical appliance (for example an electrical car) which has a first connection system.

The electrical connection system also comprises an electrical charger which has a second connection system.

The first and second connection systems are matable with one another to transfer electricity from the charger to the appliance.

The first connection system comprises a housing. The housing has a rigid external wall surrounding an inner region. Receptacles are defined in the inner region. The housing has a front region shaped to mate with the second connection system without intervention of a deformable seal.

The first connection system further comprises an electrical cable. This cable has an external insulating sheath and electrical wires. The insulating sheath has an outer surface. Each electrical wire comprises an electrical core, and a terminal attached to the electrical core. The terminal is mounted in a receptacle of the housing.

A peripheral sealing barrier extends from the external wall at the front region of the housing to the outer surface of the external insulating sheath.

One proposes a long barrier between the inner connection part and the outer part. This barrier ensures that water which contacts the electrical terminals and is charged with electricity is well separated from water in contact with the outer surface of the charger. In this way, electrical current can not flow to the user.

Even though the invention was presented above by reference to the problem of charging electrical cars, it is believed that the invention could also be applied in other contexts.

In some embodiments, one might also use one or more of the features defined in the dependent claims.

### BRIEF DESCRIPTION OF THE DRAWINGS

Other characteristics and advantages of the invention will readily appear from the following description of one of its embodiments, provided as a non-limitative examples, and of the accompanying drawings.

On the drawings :
- figure 1 is a schematic view of an electric system,
- figure 2 is a perspective view of an electrical connection system,
- figure 3 is a perspective view of the complementary electrical connection system,

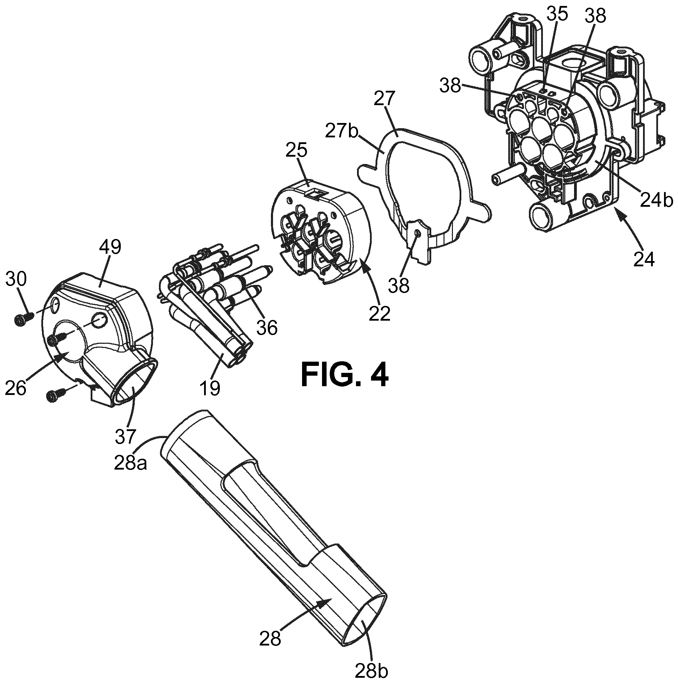

- figure 4 is an exploded rear view of the system of the figure 3,
- figure 5 is a sectional view along the line V-V of figure 3.

On the different Figures, the same reference signs designate like or similar elements.

### DETAILED DESCRIPTION

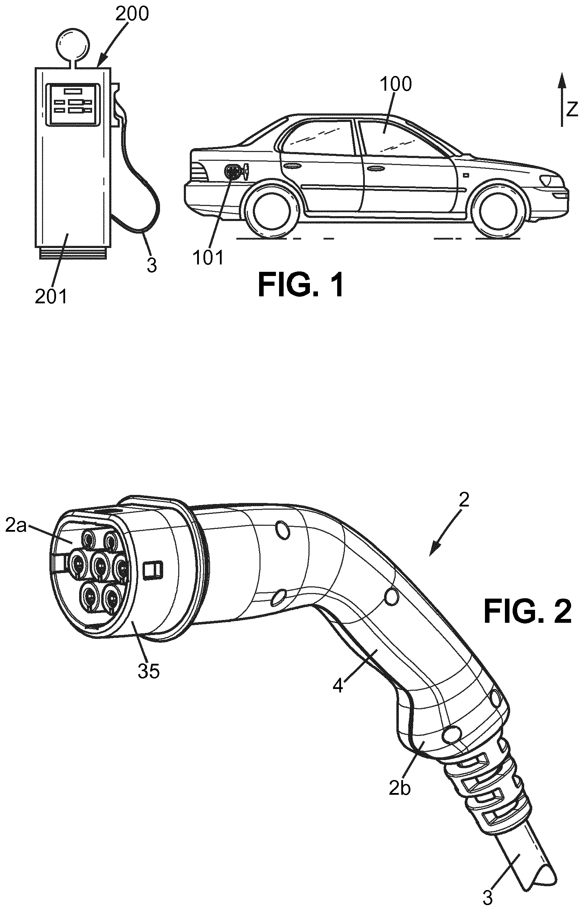

Figure 1 schematically shows an electrical appliance 100, such as an electric car. The electrical car 100 has an electrical connection system 101 for charging the batteries of the electrical car. Figure 1 also shows the charging station 200. The charging station 200 has the body 201 and the cable 3 to deliver electrical current to the electrical car 100. The charging station 200 is for example provided at home, or in a public space. It will generally be assumed that the car 100 will be parking on horizontal ground when loading, such that the vertical direction is pointing upward on Fig. 1. This orientation is of significance for the invention, since rain will generally pour mostly according to the vertical direction, including also generally a horizontal component due to wind, and since water would flow on a surface generally under the laws of gravity.

As can be seen on the Figure 2, the cable 3 has, at its front end, a plug 2. The plug 2 has a rear end 2b assembled to the cable 3, and a front end 2a to be mated with the electrical connection system 101 of the car.

The plug 2 is provided with a prehension part 4, to allow a user to grab the plug 2.

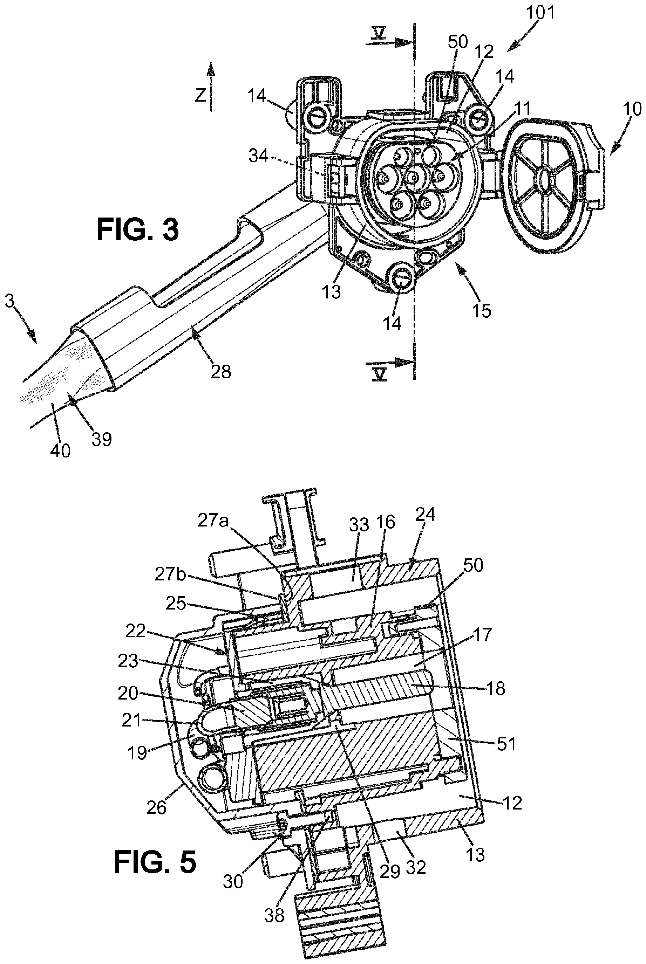

Figure 3 now shows in more details the electrical connection system 101 of the car. The system 101 can be slightly inclined with respect to the horizontal (assuming the car rests on a horizontal platform), so that the front face of the system can be facing slightly upward (the normal to the front face of the system and/or the longitudinal axis of the contacts forms an angle of about 5°-20° with the horizontal plane).

Most of the features visible in figure 3 are in fact not accessible to the user, when the system is installed in the car. The user only has access to the door 10, which is shown open on figure 3, and which can alternately take a closed condition where the connection system is not accessible. The user also has access to the front end of the connection system, comprising an inner body 11 and an outer shell 13 surrounding the inner body 11. The outer shell of the car hides the rest of the system to the user, as shown by the dotted line 34.

A free space 12 is provided between the outer shell 13 and the inner body 11 and is shaped to receive a complementary surrounding shell 35 of the front end of the plug 2. The rest of the electrical connection system 101 is not accessible to the user, and is located inside the electrical car. The connection system is fixed to a structure of the car using a suitable fixation system and, such as screws led through bores 14. This assembly may be sealed in any suitable way.

The system comprises the housing 15 made of rigid plastic material. The housing 15 comprises a front part 24 and a rear cover 26 assembled to one another. The front part 24 can geometrically be divided between an inner region and an outer region. The separation between the inner and outer regions can for example be defined by the geometry of the connection interface with the plug. Since the free space 12 receives the outer connection shape of the plug, the inner space of the front part 24 is located inside this free space 12. Hence, the inner body 11 is located in the inner region. The outer shell 13 is located in the outer region. The inner body 11 comprises the surrounding wall 16, which surrounds the plurality of receptacles 17. Each receptacle 17 is shaped to receive an electrical contact 18. Each electrical contact 18 is assembled to an electric wire 19 which is part of the cable 3. Each electrical wire 19 comprises an electrically conducting core 20 surrounded by an electrically insulating sheath 21. The electrical contact 18 is assembled in a suitable way into the receptacle 17 of the housing 15.

For example, the electrical connection system 101 comprises a rear holder 22, which is assembled to the rear of the front part 24. This assembly is for example made by snap-fitting an elastic leg 25 of the rear holder 22 to projecting pegs 35 at the rear of the front part 24. The contacts 18 are snap-fitted to the rear holder 22, for example using elastic lances 23 of the rear holder which cooperate with grooves 36 of the contacts 18.

The housing further comprises a rear cover 26 which is assembled to the front part 24. It has an outer wall. The rear cover 26 is for example a right-angled cover, which comprises a front opening facing the rear of the front part 24, and a rear opening 37 oriented at 90° with respect to the front opening. The bundle of wires 19 enters the rear cover 26 through the rear opening, and exits it through the front opening.

The rear cover 26 is for example assembled by screwing to the front part 24 through the rear holder 22 using screws 30 in threaded holes 38.

The connection system is provided with a seal 27. The seal 27 is a flat seal extending peripherally as a ring. One front face 27a contacts a rear face 24b of the front part 24. The opposite rear face 27b is pressed upon by the cover 26 all around the periphery. Inside the interface between the cover and the seal, the rear holder 22 may also peripherally contact the rear face 27b of the seal, as visible on Fig. 5.

In the bottom of the fixation, the screw 30 can be assembled through the seal 27, to prevent any water from flowing through the screw connection. The seal 27 has a screw hole 38 to receive the bottom screw 30.

At the rear opening of the rear cover 26, an elastomer sheath 28 is sealingly assembled to the rear cover 26. The elastomer sheath has a front end 28a and an opposed rear end 28b. The front end for example surrounds and tightly fits on the rear opening 37 of the rear cover. The rear end of the sheath 28 is sealingly assembled to the wires 19, either individually, or through an insulating sheath 39 which gathers together the electrical wires (visible on Fig. 3), and having an outer surface 40.

As can be seen notably of Fig. 5, the electrical wire 19 is not assembled in the housing 15 in a waterproof way. To the contrary, it is provided a water drain 29 in the receptacle so that water provided inside the cavity 17 is allowed to flow inside the cover 26 and along the outer surface of the wires through the rear opening of the rear cover 26 inside the sheath 28. Hence, water which finds itself in a receptacle 17 is prohibited from flowing out of a barrier comprising the wall 16 of the front part 24, the seal 27, the cover 26 and the sheath 28.

The outer wall 12 may further comprise a water drain 32. The water drain will be provided at the lowest part of the housing, assuming the car is loaded parking on a horizontal surface. The outer wall 12 may further be provided with a water drain 33 in the top area. This water drain 33 will make it easier, for water coming from the top (e.g. rain) to be preferentially guided inside the free space 13, and hence toward the bottom water drain 32. Following the law of gravity, rain water is not allowed to flow on the top surface of the rear cover 26.

Thus, even in case of heavy rain, the flow paths of water touching the contacts on the vehicle side, and hence charged with power, will not cross the flow paths touching the hand of the user handling the charging plug, thus providing enhanced security to the user. The flow path touching the hand of the user may flow inside the inner free space 12, where gravity will lead it to the drain hole 32. Hence, the front top edge 50 of the housing acts as a water parting line. This is true even if the housing comprises a front grid 51 attached to the front part 24 as in the present example.

## Claims

1. An electrical connection system comprising:
- an electrical appliance (100) having a first connection system (101),
- an electrical charger (200) having a second connection system (2), the first and second connection systems being matable with one another to transfer electricity from the charger to the appliance, wherein the first connection system comprises:
- a housing (15) comprising a rigid external wall (16) surrounding an inner region in which at least one receptacle (17) is defined, the housing having a front region shaped to mate with the second connection system without intervention of a deformable seal,
- an electrical cable (3) comprising an external insulating sheath (39) and at least one electrical wire (19), wherein the insulating sheath has an outer surface, wherein each electrical wire comprises an electrical core (20), and a terminal (18) attached to the electrical core and mounted in a respective receptacle of the housing,
**characterized in that**
a peripheral sealing barrier extends from the external wall (16) at the front region of the housing to said outer surface (21, 40) of the external insulating sheath (39),
**in that** the housing comprises a front part (24) having said front region,
and a rear cover (26) assembled to said front part, said rear cover comprising a front opening through which said terminal (18) extends,
and a rear opening (37), through which said insulating sheath (39) extends,
said system further comprising a rear seal (27) compressed between the front part and the rear cover of the housing, wherein said system further comprises an elastomeric sheath (28) extending longitudinally from the outer surface of the insulating sheath (39) of the electrical cable (3) to the rear cover (26) of the housing, and sealingly assembled to the rear opening of the rear cover (26), **in that** said peripheral sealing barrier comprises said external wall (16), said rear seal (27), an external wall of said rear part (26) and said elastomeric sheath (28) contacting and surrounding said external wall of the rear cover (26).

2. An electrical connection system according to claim 1, further comprising a locking system (30, 38) to lock the front part on the rear cover.

3. An electrical connection system according to any of claims 1 to 2, wherein the insulating sheath (39) extending through said rear opening (37).

4. An electrical connection system according to any of claims 1 to 3, further comprising at least one water drain (32) in the housing, outside an inner space defined by the sealing barrier.

5. An electrical connection system according to any of claims 1 to 4, further comprising at least one water drain (29) in the receptacle, inside an inner space defined by the sealing barrier.

6. An electrical connection system according to any of claims 1 to 5, further comprising a contact holder (22) inside an inner space defined by the sealing barrier, wherein said contact is maintained in the receptacle with said contact holder.

7. An electrical connection system according to any of claims 1 to 6, wherein the second connection system comprises an outer shell (4) for user prehension.

## Patentansprüche

1. Elektrisches Verbindungssystem, das aufweist:
- eine elektrische Einrichtung (100) mit einem ersten Verbindungssystem (101),
- ein elektrisches Ladegerät (200) mit einem zweiten Verbindungssystem (2), wobei das erste und das zweite Verbindungssystem miteinander verbindbar sind zum Übertragen von Elektrizität von dem Ladegerät zu der Einrichtung, wobei das erste Verbindungssystem aufweist:
- ein Gehäuse (15) mit einer starren Außenwand (16), die einen inneren Bereich umgibt, in dem zumindest eine Aufnahme (17) definiert ist, wobei das Gehäuse einen vorderen Bereich hat in einer Form zum Verbinden mit dem zweiten Verbindungssystem ohne Intervention einer verformbaren Dichtung,
- ein elektrisches Kabel (3), das eine externe Isolierhülle (39) und zumindest einen elektrischen Draht (19) aufweist, wobei die Isolierhülle eine äußere Oberfläche hat, wobei jeder elektrische Draht einen elektrischen Kern (20) aufweist, und einen Anschluss (18), der an dem elektrischen Kern befestigt ist und in einer jeweiligen Aufnahme des Gehäuses angebracht ist, **dadurch gekennzeichnet, dass**
sich eine periphere Abdichtungsbarriere von der Außenwand (16) an dem vorderen Bereich des Gehäuses zu der Außenfläche (21, 40) der externen Isolierhülle (39) erstreckt,
das Gehäuse einen vorderen Teil (24) mit dem vorderen Bereich und eine hintere Abdeckung (26) aufweist, die mit dem vorderen Teil zusammengefügt ist, wobei die hintere Abdeckung eine vordere Öffnung aufweist, durch die sich der Anschluss (18) erstreckt, und eine hintere Öffnung (37), durch die sich die Isolierhülle (39) erstreckt,
wobei das System weiter eine hintere Dichtung (27) aufweist, die zwischen dem vorderen Teil und der hinteren Abdeckung des Gehäuses komprimiert ist, wobei das System weiter eine elastomere Hülle (28) aufweist, die sich in Längsrichtung von der Außenfläche der Isolierhülle (39) des elektrischen Kabels (3) zu der hinteren Abdeckung (26) des Gehäuses erstreckt und abdichtend an der hinteren Öffnung der hinteren Abdeckung (26) angebracht ist, dass die periphere Abdichtungsbarriere die Außenwand (16), die hintere Dichtung (27), eine Außenwand des hinteren Teils (26) und die elastomere Hülle (28) aufweist, die die Außenwand der hinteren Abdeckung (26) kontaktiert und umgibt.

2. Elektrisches Verbindungssystem gemäß Anspruch 1, das weiter ein Verriegelungssystem (30, 38) zum Verriegeln des vorderen Teils an der hinteren Abdeckung aufweist.

3. Elektrisches Verbindungssystem gemäß einem der Ansprüche 1 bis 2, wobei sich die Isolierhülle (39) durch die hintere Öffnung (37) erstreckt.

4. Elektrisches Verbindungssystem gemäß einem der Ansprüche 1 bis 3, das weiter zumindest einen Wasserablauf (32) in dem Gehäuse aufweist, außerhalb eines durch die Abdichtungsbarriere definierten Innenraums.

5. Elektrisches Verbindungssystem gemäß einem der Ansprüche 1 bis 4, das weiter zumindest einen Wasserablauf (29) in der Aufnahme aufweist, innerhalb eines durch die Abdichtungsbarriere definierten Innenraums.

6. Elektrisches Verbindungssystem gemäß einem der Ansprüche 1 bis 5, das weiter einen Kontakthalter (22) innerhalb eines durch die Abdichtungsbarriere definierten Innenraums aufweist, wobei der Kontakt in der Aufnahme mit dem Kontakthalter gehalten wird.

7. Elektrisches Verbindungssystem gemäß einem der Ansprüche 1 bis 6, wobei das zweite Verbindungssystem eine äußere Umhüllung (4) für ein Greifen durch den Benutzer aufweist.

## Revendications

1. Système de connexion électrique comprenant :
- un appareil électrique (100) ayant un premier système de connexion (101),
- un chargeur électrique (200) ayant un second système de connexion (2), le premier et le second système de connexion pouvant être accouplés l'un avec l'autre pour transférer de l'électricité depuis le chargeur vers l'appareil, dans lequel le premier système de connexion comprend :
- un boîtier (15) comprenant une paroi externe rigide (16) qui entoure une région intérieure dans laquelle au moins un réceptacle (17) est défini, le boîtier ayant une région avant conformée pour s'accoupler avec le second système de connexion sans intervention d'un joint déformable,
- un câble électrique (3) comprenant une gaine d'isolation externe (39) et au moins un fil électrique (19), dans lequel la gaine d'isolation a une surface extérieure, et dans lequel chaque fil électrique comprend un noyau électrique (20) et une borne (18) attachée au noyau électrique et montée dans un réceptacle respectif du boîtier,
**caractérisé en ce que**
une barrière d'étanchement périphérique s'étend depuis la paroi externe (16) au niveau de la région avant du boitier jusqu'à ladite surface extérieure (21, 40) de la gaine d'isolation externe (39),
**en ce que** le boîtier comprend une partie avant (24) ayant ladite région avant, et un couvercle arrière (26) assemblé à ladite partie avant, ledit couvercle arrière comprenant une ouverture avant à travers laquelle s'étend ladite borne (18), et une ouverture arrière (37) à travers laquelle s'étend ladite gaine isolante (39),
ledit système comprend en outre un joint arrière (27) comprimé entre la partie avant et le couvercle arrière du boîtier,
dans lequel ledit système comprend en outre une gaine en élastomère (28) qui s'étend longitudinalement depuis la surface extérieure de la gaine isolante (39) du câble électrique (3) jusqu'au couvercle arrière (26) du boîtier, et qui est assemblée avec étanchement sur l'ouverture arrière du couvercle arrière (26),
**en ce que** ladite barrière d'étanchement périphérique comprend ladite paroi externe (16), ledit joint arrière (27), une paroi externe de ladite partie arrière (26), et ladite gaine en élastomère (28) en contact avec ladite paroi externe du couvercle arrière (26) et de manière à entourer celle-ci.

2. Système de connexion électrique selon la revendication 1, comprenant en outre un système de blocage (30, 38) pour bloquer la partie avant sur le couvercle arrière.

3. Système de connexion électrique selon l'une quelconque des revendications 1 et 2, dans lequel la gaine isolante (39) s'étend à travers ladite ouverture arrière (37).

4. Système de connexion électrique selon l'une quelconque des revendications 1 à 3, comprenant en outre au moins un drain pour l'eau (32) dans le boîtier, à l'extérieur d'un espace intérieur défini par la barrière d'étanchement.

5. Système de connexion électrique selon l'une quelconque des revendications à 4, comprenant en outre au moins un drain pour l'eau (29) dans le réceptacle, à l'intérieur d'un espace intérieur défini par la barrière d'étanchement.

6. Système de connexion électrique selon l'une quelconque des revendications 1 à 5, comprenant en outre un porte-contact (22) à l'intérieur d'un espace intérieur défini par la barrière d'étanchement, dans lequel ledit contact est maintenu dans le réceptacle avec ledit porte-contact.

7. Système de connexion électrique selon l'une quelconque des revendications 1 à 6, dans lequel le second système de connexion comprend une coque extérieure (4) destinée à la préhension par un utilisateur.
